(19) Europäisches Patentamt
European Patent Office
Office européen des brevets

(11) **EP 1 799 529 B1**

(12) **FASCICULE DE BREVET EUROPEEN**

(45) Date de publication et mention de la délivrance du brevet:
**22.02.2012 Bulletin 2012/08**

(51) Int Cl.:
***B60T 8/1764*** *(2006.01)*    ***B62D 7/15*** *(2006.01)*
***B62D 6/00*** *(2006.01)*

(21) Numéro de dépôt: **05810743.4**

(22) Date de dépôt: **06.10.2005**

(86) Numéro de dépôt international:
**PCT/FR2005/050824**

(87) Numéro de publication internationale:
**WO 2006/040491 (20.04.2006 Gazette 2006/16)**

(54) **COMMANDE DE BRAQUAGE DE ROUES ARRIERE DE VEHICULE AUTOMOBILE EN SITUATION DE FREINAGE AVEC ADHERENCE ASYMETRIQUE**

LENKSTEUERUNG FÜR DIE HINTERRÄDER EINES KRAFTFAHRZEUGES UND EINE BREMSSITUATION MIT ASYMMETRISCHER HAFTUNG

STEERING CONTROL FOR THE REAR WHEELS OF A MOTOR VEHICLE AND AN ASYMMETRICAL ADHERENCE BRAKING SITUATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.10.2004 FR 0410651**

(43) Date de publication de la demande:
**27.06.2007 Bulletin 2007/26**

(73) Titulaire: **Renault s.a.s.**
**92100 Boulogne Billancourt (FR)**

(72) Inventeurs:
• **GUEGAN, Stéphane**
  **F-78000 VERSAILLES (FR)**
• **POTHIN, Richard**
  **F-78760 JOUARS-PONTCHARTRAIN (FR)**
• **CAYOL, Olivier**
  **F-78000 VERSAILLES (FR)**

(56) Documents cités:
**DE-A1- 4 222 958      FR-A- 2 647 077**
**US-A- 5 089 967       US-A- 5 316 379**
**US-A1- 2003 122 417**

• **PATENT ABSTRACTS OF JAPAN vol. 013, no. 067 (M-798), 15 février 1989 (1989-02-15) & JP 63 269785 A (FUJI HEAVY IND LTD), 8 novembre 1988 (1988-11-08)**

**Description**

L'invention concerne la commande de braquage des roues arrière d'un véhicule automobile comportant au moins quatre roues directrices en cas de situation de freinage sur adhérence asymétrique.

Les situations de freinage sur adhérence asymétrique sont celles dans lesquelles se présente une différence de coefficient de friction entre les pneus droits et les pneus gauches du véhicule automobile, situations entraînant pour le véhicule une déviation par rapport à sa trajectoire et/ou un pivotement autour d'un axe vertical.

La demande de brevet US2002/0198646 décrit une méthode de compensation de cette perturbation par application d'une commande sous la forme d'une consigne d'angle de braquage du véhicule, cette consigne étant fonction du coefficient d'adhérence et constante pour un coefficient donné. Une telle consigne ne permet toutefois pas une adaptation fine aux différentes situations pouvant se présenter.

La demande de brevet FR03/14931 décrit un procédé et un dispositif de commande de braquage reposant sur un modèle d'état du véhicule intégrant la modélisation d'une perturbation sur la vitesse de lacet du véhicule. Ce procédé permet à partir d'un observateur d'état basé sur ce modèle d'état de déterminer la valeur de cette perturbation puis de déterminer une valeur de consigne d'angle de braquage de roue arrière qui permet un rejet asymptotique de cette perturbation. On obtient ainsi une valeur de consigne qui est fonction de la vitesse longitudinale instantanée du véhicule et de cette perturbation et qui permet de rendre imperceptible la perturbation et d'obtenir une stabilisation de la trajectoire du véhicule. Ce procédé fonctionne par une régulation en boucle fermée, déterminant une nouvelle valeur de consigne en fonction d'une valeur précédente de consigne qui est réinjectée dans l'observateur d'état. Ce fonctionnement en boucle fermée induit une certaine inertie de réponse du système de commande, la commande ne réagissant que relativement lentement à des changements brusques de situation, par exemple à des changements rapides de vitesse ou d'angle de braquage des roues avant.

La présente invention a donc pour but de fournir un procédé et un dispositif de commande de braquage des roues arrière d'un véhicule automobile à au moins quatre roues directrices, destinés à être utilisés en situation de freinage avec adhérence asymétrique, ne présentant pas les inconvénients des solutions antérieures connues et permettant notamment d'obtenir une meilleure réactivité de la commande de braquage à des changements rapides de situation.

Ce problème est résolu selon l'invention par un procédé de commande de braquage des roues arrière d'un véhicule automobile à au moins quatre roues directrices, caractérisé en ce qu'il comprend les étapes consistant à,

    a) détecter la présence d'une situation de freinage avec adhérence asymétrique,

    b) déterminer, indépendamment d'une valeur précédente de consigne d'angle de braquage de roue arrière, une première valeur intermédiaire de consigne d'angle de braquage de roue arrière à partir de la valeur de vitesse longitudinale instantanée du véhicule et de la valeur d'angle de braquage des roues avant,

    c) estimer la perturbation sur la vitesse de lacet du véhicule, en fonction de ladite valeur précédente de consigne d'angle de braquage de roue arrière,

    d) déterminer une deuxième valeur intermédiaire de consigne d'angle de braquage de roue arrière en fonction de ladite perturbation,

    e) déterminer la valeur courante de consigne d'angle braquage de roue arrière en corrigeant ladite première valeur intermédiaire de consigne d'angle de braquage de roue arrière avec ladite deuxième valeur intermédiaire de consigne d'angle de braquage de roue arrière,

    f) transmettre, en cas de situation de freinage avec adhérence asymétrique, ladite valeur courante de consigne d'angle braquage de roue arrière à au moins un actionneur de braquage desdites roues arrière.

Ce problème est également résolu selon l'invention par un dispositif de commande de braquage des roues arrière d'un véhicule automobile à au moins quatre roues directrices, ledit dispositif étant apte à la mise en oeuvre du procédé selon l'invention et comprenant,

    a) des moyens pour détecter la présence d'une situation de freinage avec adhérence asymétrique,

    b) des moyens pour déterminer, indépendamment d'une valeur précédente de consigne d'angle de braquage de roue arrière, une première valeur intermédiaire de consigne d'angle de braquage de roue arrière à partir de la valeur de vitesse longitudinale instantanée du véhicule et de la valeur d'angle de braquage des roues avant,

    c) des moyens pour estimer la perturbation sur la vitesse de lacet du véhicule, en fonction de ladite valeur précédente de consigne d'angle de braquage de roue arrière,

    d) des moyens pour estimer déterminer une deuxième valeur intermédiaire de consigne d'angle de braquage de roue arrière en fonction de ladite perturbation,

    e) des moyens pour déterminer une valeur courante de consigne d'angle braquage de roue arrière en corrigeant ladite première valeur intermédiaire de consigne d'angle de braquage de roue arrière avec ladite deuxième valeur intermédiaire de consigne d'angle de braquage de roue arrière.

f) des moyens pour, en cas de situation de freinage avec adhérence asymétrique, transmettre à un actionneur de braquage desdites roues arrière, ladite valeur courante de consigne d'angle braquage de roue arrière.

Selon l'invention, on procède à une double détermination de valeur de consigne : d'une part une première détermination sur la base de la vitesse longitudinale instantanée du véhicule et de la valeur d'angle de braquage des roues avant, d'autre part, une deuxième détermination, basée sur une précédente valeur de consigne, destinée à corriger ladite première détermination et effectuée à partir de la perturbation estimée sur la vitesse de lacet du véhicule. Il est ainsi possible d'obtenir une valeur de consigne d'angle de braquage précise. Par ailleurs, de par la présence d'une première détermination préalable, effectuée indépendamment d'une valeur précédente de consigne d'angle de braquage de roue arrière, le système est plus réactif et s'adapte en particulier bien à des situations différentes du point de vue de la vitesse du véhicule et de l'angle de braquage des roues avant.

La présente invention sera décrite plus en détail à l'aide de modes de réalisation pris à titre d'exemples nullement limitatifs et illustrés par les dessins annexés, sur lesquels :

- la figure 1 est une vue schématique d'un véhicule équipé d'un système de commande selon un aspect de l'invention;
- la figure 2 est un schéma fonctionnel du système selon un aspect de l'invention;
- les figures 3a, 3b, 3c et 3d sont des schémas fonctionnels d'une première partie du système de la figure 2, et
- la figure 4 est un schéma fonctionnel d'une deuxième partie du système de la figure 2.

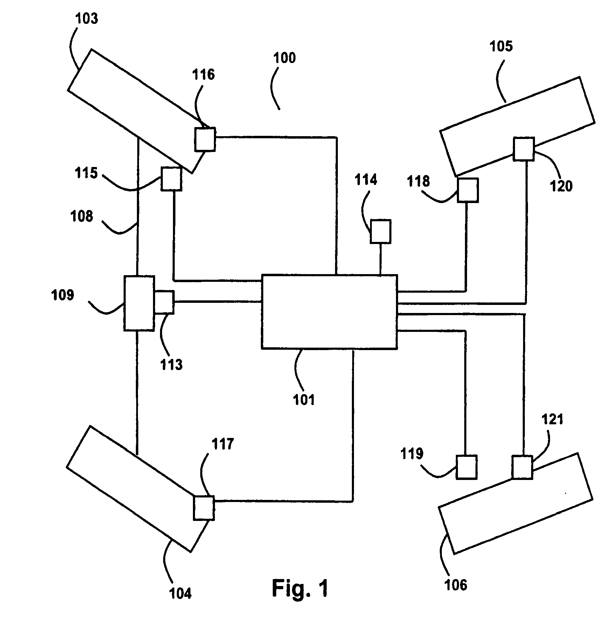

La figure 1 est une vue schématique d'un véhicule équipé d'un système de commande selon un aspect de l'invention. Le véhicule comprend un châssis 100, deux roues avant directrices 103 et 104 et deux roues arrière directrices 105 et 106, les roues étant reliées au châssis 100 par un mécanisme de suspension non représenté. Le véhicule comporte également un système de direction avec une crémaillère 108 disposée entre les roues avant 103 et 104, un actionneur de crémaillère 109 apte à orienter les roues avant 103 et 104 par l'intermédiaire de la crémaillère 108 en fonction d'ordres reçus, de façon mécanique ou électrique, en provenance d'un volant de direction non représenté, à disposition d'un conducteur du véhicule.

Le système de commande d'aide au braquage comprend une unité de commande 101, un capteur 113 de l'angle de braquage des roues avant 103 et 104, par exemple positionné sur l'actionneur 109, un capteur 115 de la vitesse instantanée du véhicule, réalisé par exemple sous forme de capteur de rotation d'une des roues avant, un capteur 114 de la vitesse de lacet du véhicule, c'est-à-dire de la vitesse de rotation du véhicule autour d'un axe vertical passant par son centre de gravité.

Selon une variante de réalisation de l'invention, le système de commande comprend également des moyens pour déterminer la pression de freinage des roues avant 105 et 106, par exemple sous forme de capteurs 116 et 117. Ces pressions de roue avant peuvent également être estimées à partir d'autres grandeurs de mesure, par exemple au moyen de modèles du véhicule.

En outre, le système de commande comprend des capteurs 118 et 119 de l'angle de braquage (angle des roues avec l'axe longitudinal du véhicule) des roues arrière 105 et 106, et des actionneurs de braquage 120 et 121 permettant d'orienter lesdites roues arrière 105 et 106. Toutefois, un seul capteur 118 et un seul actionneur 120 peuvent suffire à la détection de l'angle de braquage et à l'orientation des roues arrière 105 et 106. Les capteurs de position et de vitesse peuvent être de type optique ou encore magnétique, par exemple à effet Hall, coopérant avec un codeur solidaire d'une partie mobile tandis que le capteur est non tournant. La vitesse longitudinale instantanée V du véhicule peut être obtenue en faisant la moyenne des vitesses instantanées déterminées à partir de capteurs placés au niveau des roues avant ou des roues arrière. Dans ce cas, il est prévu un capteur 115 par roue avant ou par roue arrière. Alternativement, l'unité de commande 101 reçoit une valeur de vitesse longitudinale instantanée V du véhicule en provenance d'un autre module de commande tel qu'un module antiblocage de roues (ABS) qui a besoin pour son propre usage de déterminer une telle valeur de vitesse.

L'unité de commande 101 peut être réalisée sous la forme d'un microprocesseur équipé d'une mémoire vive, d'une mémoire morte, d'une unité centrale et d'interfaces d'entrée/sortie permettant de recevoir des valeurs de mesure des capteurs 113 à 119 et d'envoyer des instructions, notamment aux actionneurs 120 et 121.

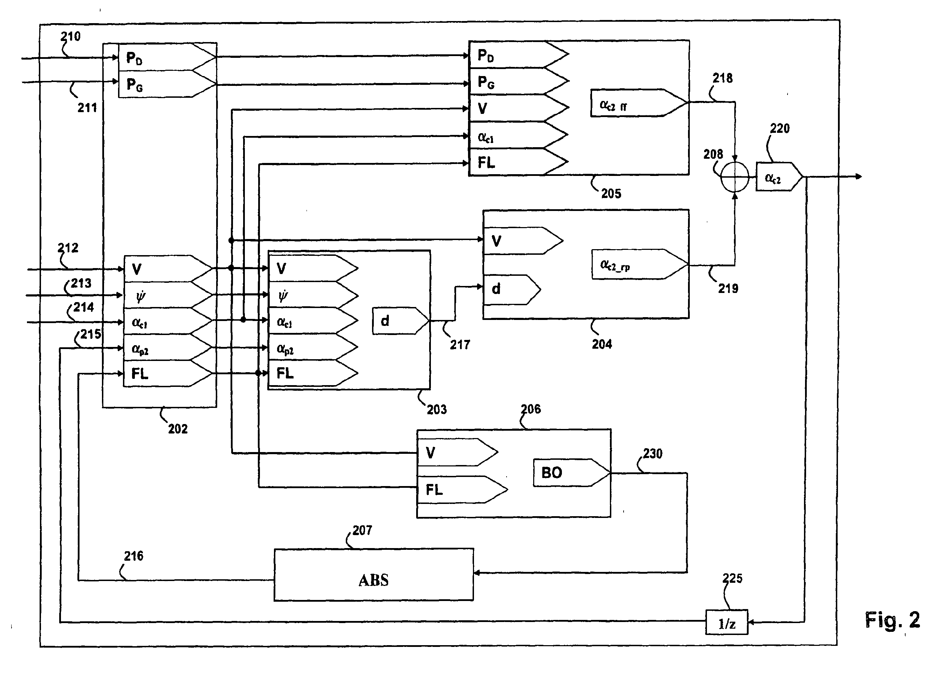

Comme représenté sur la figure 2, l'unité de commande 101 comprend un module d'entrée 202, un observateur d'état 203, un module 204 de rejet de perturbation, un module 205 de détermination directe dénommé également module « feedforward », un additionneur 208, un module 225 de retard temporel, un module de freinage antiblocage 207 (plus connu sous l'abréviation anglaise ABS de "anti blocking system") et un module 206 de commande pour le module ABS 207. Ces différents modules peuvent être mis en oeuvre dans une même unité de commande ou dans des unités de commande séparées mais communiquant entre elles.

Le module d'entrée 202 délivre aux modules 203, 204, 205 et 206 les valeurs des grandeurs dont ces modules ont respectivement besoin. Le fonctionnement et les dépendances des modules 202, 203, 204, 205 et 206 seront décrits plus en détail ci-dessous. Le module 205 de détermination directe détermine une première valeur de consigne 218 d'angle de braquage de roue arrière et le module 204 de rejet de perturbation détermine une deuxième valeur de consigne 219 d'angle de braquage de roue arrière. Ces deux valeurs 218 et 219 sont additionnées au moyen de l'additionneur 208. La sortie 220 de l'additionneur 208 est réinjectée via le module 225 de retard temporel dans le module d'entrée 202. La sortie 220 correspond à la valeur de consigne d'angle de braquage de roue arrière transmise en tant que grandeur de commande aux actionneurs de braquage des roues arrière 120, 121.

Le module d'entrée 202 reçoit les différentes valeurs de mesure en provenance des capteurs 113 à 119: vitesse longitudinale instantanée du véhicule 212, vitesse de lacet 213, la valeur de l'angle de braquage des roues avant 214. Le module d'entrée 202 reçoit en outre la sortie 215 du module 225 de retard temporel, sortie qui correspond à la valeur précédente de consigne d'angle de braquage de roue arrière. Le module d'entrée 202 reçoit également en provenance du module ABS 207 un drapeau FL 216 de détection de situation de freinage avec adhérence asymétrique. Ce drapeau peut prendre typiquement trois valeurs, par exemple 0, +1, -1, selon respectivement que l'on n'est pas en situation de freinage avec adhérence asymétrique, qu'il y a freinage avec adhérence asymétrique vers la droite ou qu'il y a freinage avec adhérence asymétrique vers la gauche. Les modules de freinage antiblocage ou modules ABS 207 sont pourvus de manière connue de moyens leur permettant à partir de diverses grandeurs de mesure (vitesse de lacet, angle de braquage des roues, ...) de générer une telle information sur la présence d'une situation de freinage avec adhérence asymétrique et ces moyens ne seront pas décrits plus en détail ici. Selon certains modes de réalisation, l'unité de commande 101 reçoit en outre via le module d'entrée 202 des valeurs de mesure 210, 211 des pressions de freinage des roues avant droite et gauche.

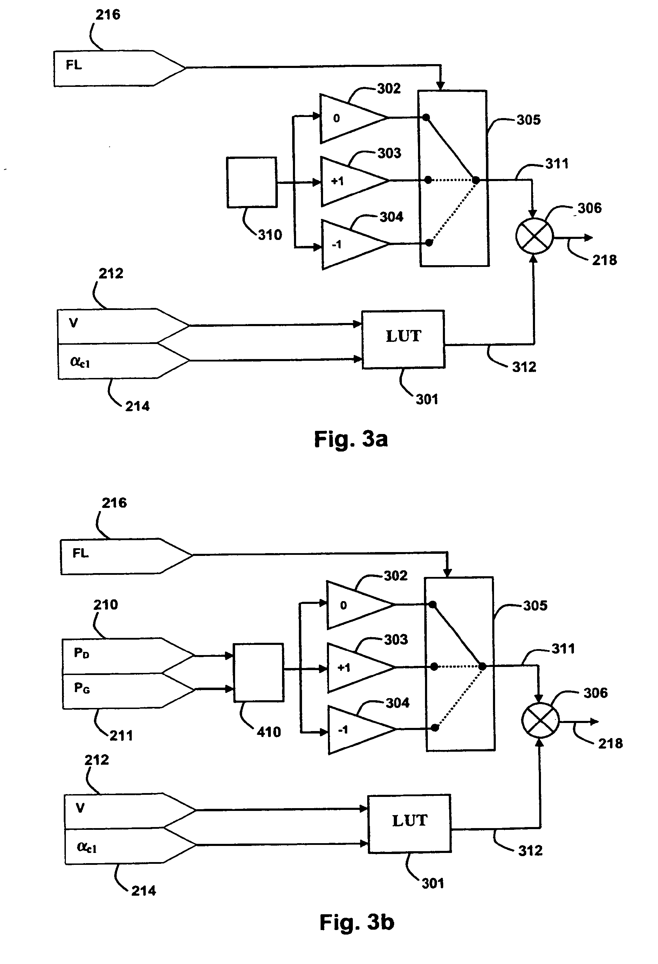

Le module 205 de détermination directe détermine une première valeur de consigne 218 d'angle de braquage de roue arrière à partir de la vitesse longitudinale instantanée 212, de la vitesse de lacet 213 et de la valeur d'angle de braquage de roue avant 214, et selon des variantes de réalisation, de la pression de freinage de roue avant droite 210 et de la pression de freinage de roue avant gauche 211. Cette valeur est déterminée sur la base de simulations effectuées pour un véhicule en situation de freinage avec adhérence asymétrique et correspond à une première approximation de la valeur de consigne idéale. Différents exemples de réalisation sont donnés ici pour ce module 205 de détermination directe et sont représentés aux figures 3a à 3d.

Selon un premier exemple de réalisation du module 205 de détermination directe qui est illustré à la figure 3a, le module 205 comprend :

- un élément 310 qui génère une valeur de référence d'angle de braquage (par exemple 3,5 rad/s),
- trois éléments de pondération 302, 303, 304 connectés en sortie de l'élément 310 et appliquant respectivement un gain de 0, +1 ou -1 à la sortie de l'élément 310,
- un commutateur de sélection 305 à trois entrées qui reçoit en entrée les sorties des trois gains 302, 303, 304 et dont la sortie est commandée par la valeur du drapeau FL 216,
- une table 301 à deux dimensions dont les entrées sont la valeur de la vitesse longitudinale instantanée 212 et la valeur de l'angle de braquage des roues avant 214,
- un multiplieur 306 qui multiplie les signaux 311, 312 issus respectivement du commutateur de sélection 305 et de la table 301 et génère en sortie la première valeur de consigne 218 d'angle de braquage de roue arrière.

Ce module 205 permet de générer une première valeur de consigne 218 qui est proportionnelle à la valeur de référence d'angle de braquage issue de l'élément 310, avec un coefficient de proportionnalité qui est fonction de la vitesse longitudinale instantanée et de la valeur de l'angle de braquage des roues avant. La table à deux _ dimensions est par exemple le résultat de simulations visant à fournir, de manière empirique et expérimentale, pour chaque couple de valeurs de vitesse longitudinale instantanée et d'angle de braquage des roues avant, un coefficient de proportionnalité par rapport à une valeur maximale possible d'angle de braquage. Le commutateur de sélection 305 permet de générer une valeur de référence nulle en l'absence de freinage avec adhérence asymétrique et, en cas de freinage avec adhérence asymétrique, d'affecter le signe approprié à la valeur de référence issue de l'élément 301 à deux dimensions, selon que l'asymétrie d'adhérence est vers la droite ou vers la gauche, c'est-à-dire selon la valeur du drapeau FL 216 . Dans cet exemple de réalisation la valeur de référence est une constante et correspond de préférence à une valeur maximale acceptable pour la valeur de consigne d'angle de braquage de roue arrière. Dans ce premier mode de réalisation du module 205 de détermination directe, une valeur de consigne constante est générée, constante qui est fonction de la vitesse longitudinale instantanée et de l'angle de braquage des roues avant.

Le deuxième exemple de réalisation du module 205 de détermination directe qui est illustré à la figure 3b, diffère de celui de la figure 3a, en ce que l'élément 310 a été remplacé par un module 410 qui détermine la valeur de référence en fonction des valeurs de pression de freinage $P_D$ 210, $P_G$ 211 de roues avant droite et gauche, selon la relation suivante :

$$\alpha_{c2\_ff} = 2 \cdot \frac{D_1 + D_2}{D_1 \cdot D_2 \cdot L} \cdot \mu \cdot \phi \cdot R_e \cdot e \cdot \left(P_D - P_G\right) \qquad (1)$$

où

$P_D$ et $P_G$ sont les pressions de freinage des roues avant droite et gauche,

$\mu$ est le coefficient de frottement des plaquettes de frein,

$\phi$ est la surface du piston de frein,

$R_e$ est le rayon efficace, c'est à dire la distance moyenne du centre à la zone d'application des plaquettes sur le disque, et

$e$ désigne la voie du véhicule, c'est-à-dire la distance entre la roue droite et la roue gauche.

En effet, pour un frein à disque, le couple de freinage $C_{frein}$ est donné par la relation ci-dessous :

$$C_{frein} = 2\mu \cdot \phi \cdot R_e \cdot P$$

Le couple de lacet induit par un freinage avec adhérence asymétrique droite / gauche est par conséquent estimé par l'équation ci-dessous :

$$\dot{C}_{lacet} = 2\mu \cdot \phi \cdot R_e \cdot \left(P_D - P_G\right) \cdot e/2$$

Si les pressions de freinage sont exprimées en bar, on a approximativement :

$$C_{lacet} \approx 50 \cdot \left(P_D - P_G\right).$$

D'autre part, l'angle de braquage arrière à appliquer pour corriger un couple de lacet $C_{lacet}$, vaut :

$$\alpha_2 = 2 \cdot \frac{D_1 + D_2}{D_1 \cdot D_2 \cdot L} \cdot C_{lacet}$$

Au final on retrouve donc bien la relation (1) entre l'angle de braquage arrière et les pressions de freinage. Dans ce deuxième mode de réalisation du module 205 de détermination directe, une valeur de consigne, fonction de la différence entre les pressions de freinage appliquées aux roues avant, est donc générée.

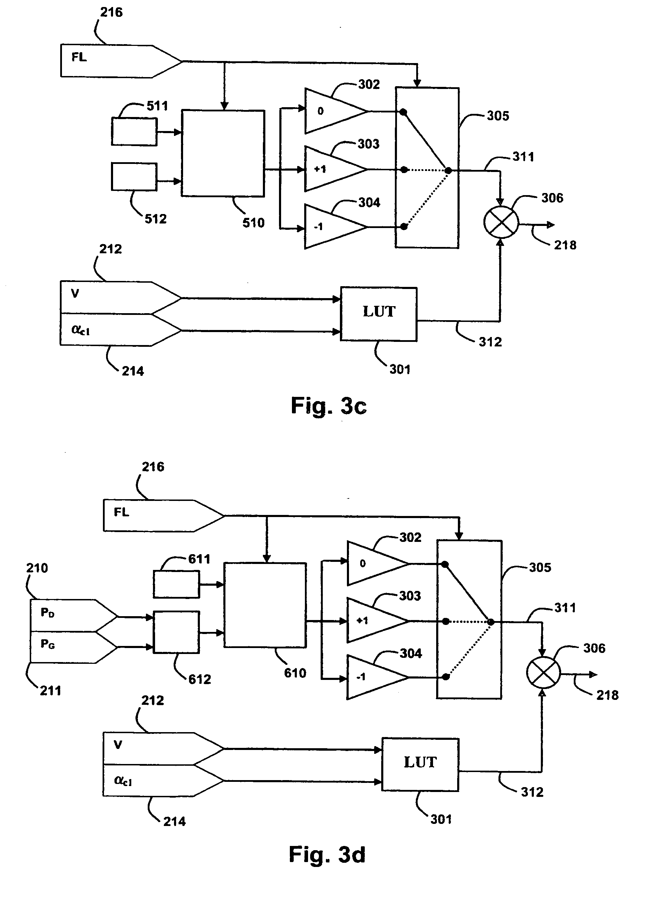

Le troisième exemple de réalisation du module 205 de détermination qui est illustré à la figure 3c, diffère de celui de la figure 3a, en ce que l'élément 310 a été remplacé par un module 510 qui détermine la valeur de référence en effectuant un filtrage temporel entre deux valeurs constantes, générées respectivement par les éléments 511 et 512. Ces deux valeurs constantes sont de préférence la valeur initiale minimale (0 rad/s en général) et finale maximale (par exemple 3,5 rad/s) de la consigne d'angle de braquage de roue arrière. Dans ce troisième mode de réalisation du module 205 de détermination directe, la valeur de consigne évolue donc entre deux valeurs constantes, la vitesse d'évolution pouvant être rendue réglable au moyen du filtre temporel 510.

Le quatrième exemple de réalisation du module 205 de détermination qui est illustré à la figure 3d, diffère de celui de la figure 3c, en ce que l'élément 512 a été remplacé par un module 612, identique au module 410 précédemment décrit de la figure 3b, qui détermine la valeur de référence ou valeur maximale de consigne en fonction des valeurs de pressions de freinage $P_D$ 210 et $P_G$ 211 de roues avant droite et gauche. Dans ce quatrième mode de réalisation du module 205 de détermination directe, la valeur de consigne évolue donc entre une valeur initiale constante et une valeur maximale finale, cette dernière étant fonction de la différence de pression de freinage entre les roues avant, la vitesse de convergence vers la valeur finale pouvant être également réglable au moyen du filtre temporel 510.

L'observateur d'état 203 de la figure 2 permet d'estimer les informations qui ne sont pas mesurées et qui sont nécessaires à la commande, notamment les perturbations qui agissent sur le véhicule. L'observateur d'état 203 peut par exemple être construit à partir d'un modèle d'état d'un véhicule à deux roues directrices sans ballant en faisant l'hypothèse qu'une perturbation d de type échelon temporel peut agir directement sur la vitesse de lacet du véhicule sur un intervalle de temps fini. Des variables qui modélisent le comportement de l'actionneur 120 de braquage peuvent être ajoutées au modèle. L'équation d'état associée au modèle d'état comprenant la perturbation sur la vitesse de lacet, est par exemple la suivante :

$$\begin{cases} \dot{X} = AX + BX_1 + CX_2 \\ Y = DX \end{cases} \tag{2}$$

dans laquelle on note respectivement,

$X$ le vecteur d'état de dimension (n,1),

$\dot{X}$ la dérivée temporelle du vecteur d'état de dimension (n,1),

$X_1$ le premier vecteur d'entrée de dimension (m,1),

$X_2$ le deuxième vecteur d'entrée de dimension (m,1),

$Y$ le vecteur de sortie de dimension (p,1),

A la matrice d'état de dimension (n,n),

B la première matrice d'entrée de dimension (n,m),

C la deuxième matrice d'entrée de dimension (n,m),

D la matrice de sortie de dimension (p,n),

Où p, n et m sont des nombres entiers supérieurs ou égaux à 1.

Dans l'exemple de réalisation donné ici n=4, p=m=1 et les vecteurs et matrices sont définis ainsi:

$$X = \begin{bmatrix} \dot{\psi} \\ \beta \\ \alpha_{p2} \\ d \end{bmatrix}$$

$$X_1 = \alpha_{c2}$$

$$X_2 = \alpha_{c1}$$

$$Y = \dot{\psi} + d$$

$$A = \begin{bmatrix} -\dfrac{D_1 L_1^2 + D_2 L_2^2}{V I_z} & \dfrac{D_2 L_2 - D_1 L_1}{I_z} & \dfrac{-D_2 L_2}{I_z} & 0 \\ -1 + \dfrac{D_2 L_2^- - D_1 L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{bmatrix}$$

$$B = \begin{bmatrix} 0 \\ 0 \\ \dfrac{1}{\tau} \\ 0 \end{bmatrix}$$

$$C = \begin{bmatrix} \dfrac{D_1 L_1}{I_z} \\ \dfrac{D_1}{MV} \\ 0 \\ 0 \end{bmatrix}$$

$$D = \begin{bmatrix} 1 & 0 & 0 & 1 \end{bmatrix}$$

Les différentes constantes utilisées dans le modèle représentent respectivement:

M (kg) la masse totale du véhicule,
$I_z$ (N.m) le moment d'inertie du véhicule autour d'un axe vertical passant par son centre de gravité,
$L_1$ (m) la distance du centre de gravité à l'essieu avant,
$L_2$ (m) la distance du centre de gravité à l'essieu arrière,
$D_1$ (N/rad) la rigidité de dérive avant,
$D_2$ (N/rad) la rigidité de dérive arrière,
r le temps de réponse de l'actionneur 120,

et les différentes variables utilisées dans le modèle représentent respectivement:

V (m/s) la vitesse longitudinale instantanée du véhicule 212,
$\dot{\psi}$ (rad/s) la vitesse de lacet 213,
d (rad/s) la perturbation sur la vitesse de lacet 217,
$\alpha_{c1}$ (rad) la valeur courante 214 de l'angle de braquage des roues avant, valeur qui est mesurée,
$\alpha_{c2}$ (rad) la valeur courante 220 de l'angle de braquage des roues arrière, c'est-à-dire la valeur de consigne appliquée en sortie 220 de l'unité de commande 101 à l'actionneur 120,
$\alpha_{p2}$ (rad) la valeur précédente 215 de l'angle de braquage des roues arrière, issue du module 225 de retard temporel, et
β (rad) l'angle de dérive, c'est-à-dire l'angle que fait le vecteur de vitesse instantanée du véhicule avec l'axe longitudinal du véhicule.

A partir de ce modèle d'état, on applique la théorie classique des observateurs linéaires. Un observateur d'état 203, basé sur ce modèle d'état, peut être construit de la manière suivante:

$$\begin{cases} \dot{\hat{X}} = A\hat{X} + BX_1 + CX_2 + K(V)(\hat{d}) \\ \hat{Y} = D\hat{X} \end{cases}$$

avec

$$\hat{X} = \begin{bmatrix} \hat{\dot{\psi}} \\ \hat{\beta} \\ \hat{\alpha}_{p2} \\ \hat{d} \end{bmatrix}$$

et où K(V) est une matrice de dimension (4,1) et constitue le paramètre de réglage de l'observateur d'état qui est fonction de la vitesse longitudinale instantanée V du véhicule, le signe « ^ » signifiant dans ces relations que les valeurs correspondantes sont des valeurs estimées. Le paramètre K(V) est représentatif de la confiance que l'on a dans le modèle d'état. Par exemple, pour K(V)=0, la confiance est maximale et l'on retrouve pour l'observateur d'état le modèle d'état.

Les coefficients de cette matrice K(V) sont calculés par des méthodes numériques d'approximation qui sont connues du domaine de l'automatique, par exemple par application d'une méthode de résolution de l'équation différentielle dite de Ricatti.

L'équation différentielle de l'observateur d'état 203 peut également être écrite de la manière suivante:

$$\begin{cases} \hat{\dot{X}} = A\hat{X} + B_1 X_1 + B_2 X_2 + B_3 \dot{\Psi} \\ \hat{Y} = D\hat{X} \end{cases} \qquad (3)$$

Un tel observateur d'état permet de déterminer les relations existant entre les états du véhicule, déterminés à partir de valeurs mesurées ou estimées, et l'ensemble des perturbations qui agissent sur le véhicule. Il permet plus particulièrement une détermination de la perturbation $\hat{d}$ en fonction de X, $X_1 = \alpha_{c2}$, $X_2 = \alpha_{c1}$ et $\dot{\psi}$ par application d'une transformée de Laplace à l'équation (12). On obtient alors pour $\hat{d}$ la manière suivante:

$$\hat{d} = H_1(s)\alpha_{c1} + H_2(s)\alpha_{c2} + H_3(s)\dot{\Psi} \qquad (4)$$

où s est la variable de Laplace, et où $H_1$, $H_2$ et $H_3$ sont les fonctions de transfert et définies par

$$H_i(s) = C_d (sI - A)^{-1} B_i \text{ pour i= 1 à 3,}$$

et où

$$C_d = \begin{pmatrix} 0 & 0 & 0 & 1 \end{pmatrix}.$$

En pratique, l'équation différentielle (2) ou (3) est discrétisée et on approche la solution donnée par la relation (4) au moyen de méthodes numériques de résolution bien connues, par exemple par la méthode d'Euler.

Le module 204 de rejet de perturbation détermine la valeur de consigne d'angle de braquage de roue arrière qui permet un rejet asymptotique de la perturbation. La perturbation est rendue, en appliquant une telle valeur de consigne, inobservable pour la grandeur considérée, ici pour la vitesse de lacet, ce qui se traduit par une stabilisation de la trajectoire et une meilleure tenue de route du véhicule.

On obtient l'expression de la valeur de consigne en fonction de $\hat{d}$ en imposant dans les équations matricielles précédentes que la dérivée partielle de $\dot{\psi}$ par rapport à $\hat{d}$ est nulle de manière à supprimer l'influence de $\hat{d}$ sur la vitesse de lacet $\dot{\psi}$. Cela revient à dire qu'en régime stabilisé, la vitesse de lacet est la même quelle que soit la valeur de perturbation, notamment que celle-ci soit nulle ou non. En imposant pour la deuxième valeur de consigne d'angle de braquage de roue arrière une relation de proportionnalité par rapport à la perturbation $\hat{d}$ sous le forme:

$$\alpha_{c2\_rp} = -G\hat{d}$$

on obtient:

$$G = \frac{\left((D_1 L_1 - D_2 L_2)*\left(MV^2 L_2 + D_1 L_1 (L_1 + L_2)\right) - D_1 (L_1 + L_2)\left(D_1 L_1^2 + D_2 L_2^2\right)\right)}{V D_1 D_2 L_2 (L_1 + L_2)}.$$

La deuxième valeur de consigne d'angle de braquage de roue arrière est donc proportionnelle à la perturbation $\hat{d}$ estimée par l'observateur d'état 203 et le coefficient de proportionnalité G est fonction de la vitesse longitudinale instantanée V du véhicule.

L'additionneur 208 permet de faire la somme des valeurs de consigne $\alpha_{c2\_ff}$ 218 et $\alpha_{c2\_rp}$ 219 générées respectivement par le module 205 de détermination directe et le module 204 de rejet de perturbation. L'additionneur 208 génère en sortie 220 une valeur $a_{c2}$ 220 représentant la valeur de consigne d'angle de braquage, qui sera transmise à l'actionneur 120 de braquage et imposée aux roues arrière du véhicule. Cette valeur $\alpha_{c2}$ est également réinjectée via un retard temporel 225 dans le module d'entrée 202 fournissant les valeurs d'entrée à l'observateur d'état 203. L'observateur d'état 203 dispose ainsi en entrée d'une valeur précédente de consigne $\alpha_{p2}$ 215 utilisée dans la détermination de la perturbation $\hat{d}$.

L'additionneur 208 ne prend en compte la valeur issue du module 204 de rejet de perturbation que si la valeur du drapeau FL 216 indique que l'on n'est pas en situation de freinage avec adhérence asymétrique. Ou, ce qui revient au même, l'observateur d'état 203 et/ou le module 204 de rejet de perturbation asymptotique génère une valeur de sortie nulle en l'absence de situation de freinage avec adhérence asymétrique, et seule la valeur de consigne 219 générée par le module 205 de détermination directe est dans ce cas transmise à l'actionneur de braquage 120.

L'unité de commande 101 comprend donc d'une part une partie en boucle ouverte (modules 202, 205) permettant de déterminer une première valeur de consigne d'angle de braquage de roue arrière, combinée avec une partie en boucle fermée (modules 202, 203, 204, 225) permettant d'estimer une deuxième valeur de consigne d'angle de braquage de roue arrière. La première valeur de consigne est le résultat de simulations et représente une première valeur de consigne approchée, alors que la deuxième valeur de consigne représente une correction à appliquer à la première valeur de consigne, correction qui est basée sur un modèle d'état précis du véhicule et est déterminée en tenant compte de la valeur de consigne corrigée précédemment déterminée. Le système reste donc très précis du fait de la correction appliquée au moyen de l'observateur d'état et du module de rejet de perturbation, et s'adapte en outre très rapidement à des changements de situation (changement de vitesse longitudinale instantanée ou changement d'angle de braquage des roues avant) du fait de la présence de la partie en boucle ouverte qui détermine une première valeur de consigne, approchée, mais prise en compte immédiatement, sans inertie de réponse.

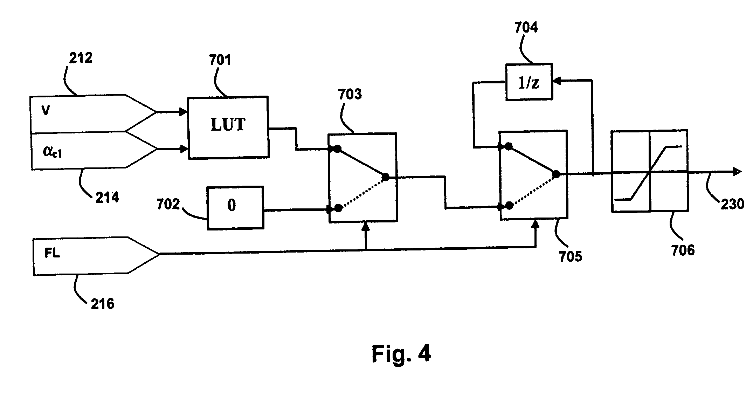

Le module de commande 206 génère une valeur de consigne 230 correspondant à une différence maximale admissible de pression de freinage entre les roues arrière droite et gauche en cas de situation de freinage avec adhérence asymétrique. Cette valeur de consigne 230 est fonction de la vitesse longitudinale instantanée 212 et de la valeur de l'angle de braquage des roues avant du véhicule 214. Dans cet exemple (figure 4), le module 206 comprend une table à deux dimensions 701 recevant en entrée les valeurs 212 et 214 et un premier commutateur de sélection 703 à deux entrées dont la première est la sortie de la table à deux dimensions 701 et l'autre est la valeur issue de l'élément 702 de génération de constante, cette constante prenant ici une valeur nulle. Le commutateur de sélection 703 est commandé par la valeur du drapeau FL 216 : si ce drapeau est non nul, c'est la sortie de la table à deux dimensions 701 qui est sélectionnée, sinon c'est la sortie de l'élément 702.

Le module de commande 206 comprend en outre un deuxième commutateur de sélection 705 à deux entrées, dont la sortie est rebouclée sur la première entrée via un module de retard temporel 704 et dont la deuxième entrée est la sortie du premier commutateur de sélection 703. Ce deuxième commutateur de sélection 705 est également commandé par le drapeau FL 216 et a pour fonction de bloquer la valeur de sortie à une valeur donnée lorsque le drapeau FL 216 prend une valeur qui indique qu'il y a situation de freinage avec adhérence asymétrique. La valeur de sortie de ce commutateur de sélection est de ce fait bloquée à la valeur déterminée par la table à deux dimensions 701 au moment de l'occurrence de la situation de freinage avec adhérence asymétrique et reste figée quelle que soit l'évolution de la vitesse du véhicule ou de l'angle de braquage de roue avant pendant la phase de freinage. Dans la situation contraire, c'est la sortie du premier commutateur de sélection 703 qui est sélectionnée.

Le module de commande 206 comprend de préférence un élément limiteur 706 en sortie du deuxième commutateur de sélection 705 dont la fonction est d'assurer que la valeur de sortie du module 206 est comprise entre une valeur minimale et une valeur maximale admissible, par exemple entre 0 et 100%, dans le cas où la valeur de consigne 230 est utilisée comme coefficient de proportionnalité pour une valeur maximale de consigne de différence de pression. En outre, le module 206 n'est activé que si la valeur du drapeau FL 216 indique que l'on est en situation de freinage avec adhérence asymétrique et génère en sortie une valeur nulle en l'absence d'une telle situation. La consigne de différence de pression est transmise au module ABS 207 de commande de freinage antiblocage.

Du fait que, lorsqu'on est en situation de freinage avec adhérence asymétrique, plus la différence de pression de freinage autorisée est grande et plus l'angle 220 de braquage de consigne peut être élevé, il y a une corrélation entre la table à deux dimensions 701 du module de commande 206 et la table à deux dimensions 301 du module 205 de détermination directe, une table devant tenir compte de l'autre table lorsque ces deux modules 205, 206 sont utilisés simultanément. La valeur 230 de la différence de pression de freinage est donc déterminée en fonction de la première valeur de consigne de pression de freinage 218 déterminée par le module de détermination directe 205. Les simulations permettant de déterminer ces tables à deux dimensions doivent donc tenir compte de la combinaison choisie entre le mode de réalisation du module 205 et celui du module 206. Cette caractéristique permet d'obtenir une meilleure stabilité du véhicule du fait du contrôle combiné et simultané de ces deux paramètres, pression de freinage et angle de braquage.

L'invention permet de bénéficier d'une valeur d'angle de braquage des roues arrière efficace, précise et adaptée à la situation de conduite (vitesse de lacet, vitesse longitudinale, présence d'une situation d'adhérence asymétrique, ....), et améliore la tenue de route du véhicule et ainsi le confort de conduite éprouvé par le conducteur.

**Revendications**

**1.** Procédé de commande de braquage des roues arrière d'un véhicule automobile à au moins quatre roues directrices, **caractérisé en ce qu'**il comprend les étapes consistant à,

   a) détecter la présence d'une situation de freinage avec adhérence asymétrique,

   b) déterminer, indépendamment d'une valeur (215) précédente de consigne d'angle de braquage de roue arrière, une première valeur (218) intermédiaire de consigne d'angle de braquage de roue arrière à partir de la valeur (212) de vitesse longitudinale instantanée du véhicule et de la valeur (214) d'angle de braquage des roues avant,

   c) estimer la perturbation (217) sur la vitesse de lacet (213) du véhicule, en fonction de ladite valeur (215) précédente de consigne d'angle de braquage de roue arrière,

   d) déterminer une deuxième valeur (219) intermédiaire de consigne d'angle de braquage de roue arrière en fonction de ladite perturbation,

   e) déterminer la valeur courante (220) de consigne d'angle braquage de roue arrière en corrigeant ladite première valeur (218) intermédiaire de consigne d'angle de braquage de roue arrière avec ladite deuxième valeur (219) intermédiaire de consigne d'angle de braquage de roue arrière,

   f) transmettre, en cas de situation de freinage avec adhérence asymétrique, ladite valeur courante (220) de consigne d'angle braquage de roue arrière à au moins un actionneur de braquage (120) desdites roues arrière.

**2.** Procédé selon la revendication 1, **caractérisé en ce que** l'étape d'estimation de la perturbation (217) sur la vitesse de lacet (213) du véhicule est réalisée à partir d'un modèle d'état du véhicule.

**3.** Procédé selon la revendication 1 ou 2, **caractérisé en ce que** ladite deuxième valeur intermédiaire de consigne d'angle de braquage de roue arrière est déterminée de manière à rejeter asymptotiquement la perturbation sur la vitesse de lacet.

**4.** Procédé selon l'une quelconque des revendications précédentes, **caractérisé en ce que** la perturbation (217) sur la vitesse de lacet du véhicule est déterminée au moyen d'un modèle d'état du véhicule automobile comprenant la vitesse longitudinale instantanée du véhicule automobile, la vitesse de lacet du véhicule automobile, l'angle de braquage de roue avant, l'angle de braquage de roue arrière et dans lequel une perturbation de type échelon agit sur la vitesse de lacet du véhicule.

**5.** Procédé selon l'une quelconque des revendications précédentes, **caractérisé en ce que** ladite deuxième valeur intermédiaire de consigne d'angle de braquage de roue arrière est proportionnelle à ladite perturbation sur la vitesse de lacet.

**6.** Procédé selon la revendication 5, **caractérisé en ce que** le coefficient de proportionnalité entre la deuxième valeur intermédiaire de consigne d'angle de braquage de roue arrière et ladite perturbation est

$$G = \frac{\left(\left(D_1 L_1 - D_2 L_2\right) * \left(MV^2 L_2 + D_1 L_1\left(L_1 + L_2\right)\right) - D_1\left(L_1 + L_2\right)\left(D_1 L_1^2 + D_2 L_2^2\right)\right)}{VD_1 D_2 L_2\left(L_1 + L_2\right)}$$

avec
M masse totale du véhicule,
$L_1$ distance du centre de gravité à l'essieu avant,
$L_2$ distance du centre de gravité à l'essieu arrière,
$D_1$ rigidité de dérive avant,
$D_2$ rigidité de dérive arrière, et
V vitesse longitudinale instantanée du véhicule.

7. Procédé selon l'une quelconque des revendications précédentes,
**caractérisé en ce que** ladite valeur courante (220) de consigne d'angle braquage de roue arrière est la somme de ladite première valeur (218) intermédiaire de consigne d'angle de braquage de roue arrière et de ladite deuxième valeur (219) intermédiaire de consigne d'angle de braquage de roue arrière.

8. Procédé selon l'une quelconque des revendications précédentes,
**caractérisé en ce qu'**il comprend en outre une étape consistant à transmettre, en l'absence de situation de freinage avec adhérence asymétrique, ladite première valeur (218) de consigne d'angle braquage de roue arrière audit au moins un actionneur de braquage desdites roues arrière.

9. Procédé selon l'une quelconque des revendications précédentes
**caractérisé en ce que** l'étape b) consiste en outre à,

- générer une valeur de référence (311) d'angle de braquage de roue arrière,
- déterminer, en fonction de ladite valeur de vitesse longitudinale instantanée du véhicule et de ladite valeur d'angle de braquage des roues avant, un coefficient (312) à appliquer à ladite valeur de référence d'angle de braquage de roue arrière pour générer ladite première valeur (218) intermédiaire de consigne d'angle de braquage de roue arrière.

10. Procédé selon la revendication 9,
**caractérisé en ce que**

- ladite valeur de référence d'angle de braquage de roue arrière est une valeur maximale d'angle de braquage de roue arrière.

11. Procédé selon la revendication 9, **caractérisé en ce que**

- ladite valeur de référence d'angle de braquage de roue arrière est une valeur maximale d'angle de braquage de roue arrière qui est fonction de la pression de freinage avant droite et de la pression de freinage avant gauche.

12. Procédé selon la revendication 9, **caractérisé en ce que**

- ladite valeur de référence d'angle de braquage de roue arrière est une valeur interpolée temporellement entre une valeur minimale initiale et une valeur maximale finale d'angle de braquage de roue arrière.

13. Procédé selon la revendication 9, **caractérisé en ce que**

- ladite valeur de référence d'angle de braquage de roue arrière est une valeur interpolée temporellement entre une valeur minimale initiale et une valeur maximale finale d'angle de braquage, laquelle est fonction de la pression de freinage avant droite et de la pression de freinage avant gauche.

14. Procédé selon l'une quelconque des revendications précédentes, **caractérisé en ce qu'**il comprend en outre les étapes consistant à,

**EP 1 799 529 B1**

- déterminer une consigne (230) de pression de freinage sous la forme d'une différence maximale de pression de freinage entre les roues arrière droite et gauche en fonction de ladite première valeur (218) intermédiaire de consigne d'angle de braquage de roue arrière et en fonction de ladite valeur de vitesse du véhicule et de ladite valeur d'angle de braquage des roues avant,
- transmettre ladite valeur de consigne de pression de freinage à un module de commande de freinage antiblocage (207).

15. Dispositif de commande de braquage des roues arrière d'un véhicule automobile à au moins quatre roues directrices, ledit dispositif étant apte à la mise en oeuvre du procédé selon l'une quelconque des revendications précédentes et comprenant,

a) des moyens (207) pour détecter la présence d'une situation de freinage avec adhérence asymétrique,
b) des moyens (205) pour déterminer, indépendamment d'une valeur (215) précédente de consigne d'angle de braquage de roue arrière, une première valeur intermédiaire de consigne d'angle de braquage de roue arrière à partir de la valeur de vitesse longitudinale instantanée du véhicule et de la valeur d'angle de braquage des roues avant,
c) des moyens (203) pour estimer la perturbation sur la vitesse de lacet du véhicule, en fonction de ladite valeur précédente de consigne d'angle de braquage de roue arrière,
d) des moyens (204) pour estimer déterminer une deuxième valeur intermédiaire de consigne d'angle de braquage de roue arrière en fonction de ladite perturbation,
e) des moyens (208) pour déterminer une valeur courante de consigne d'angle braquage de roue arrière en corrigeant ladite première valeur intermédiaire de consigne d'angle de braquage de roue arrière avec ladite deuxième valeur intermédiaire de consigne d'angle de braquage de roue arrière.
f) des moyens pour, en cas de situation de freinage avec adhérence asymétrique, transmettre à un actionneur de braquage desdites roues arrière, ladite valeur courante (220) de consigne d'angle braquage de roue arrière.

16. Véhicule automobile comprenant un dispositif de commande de freinage selon la revendication 15.

**Claims**

1. Method of controlling the steering of the rear wheels of a motor vehicle with at least four steerable wheels, **characterized in that** it comprises the steps consisting in,

a) detecting the presence of an asymmetric grip braking situation,
b) determining, independently of a previous rear wheel steering angle setpoint value, a first intermediate rear wheel steering angle setpoint value (218) on the basis of the value of the instantaneous longitudinal speed (212) of the vehicle and of the value (214) of the steering angle of the front wheels,
c) estimating the perturbation (217) of the yaw rate (213) of the vehicle, as a function of said previous rear wheel steering angle setpoint value (215),
d) determining a second intermediate rear wheel steering angle setpoint value (219) as a function of said perturbation,
e) determining the current rear wheel steering angle setpoint value (220) by correcting said first intermediate rear wheel steering angle setpoint value (218) with said second intermediate rear wheel steering angle setpoint value (219),
f) transmitting said current rear wheel steering angle setpoint value (220) to at least one steering actuator (120) of said real wheels in the event of an asymmetric grip braking situation.

2. Method according to Claim 1, **characterized in that** the step of estimating the perturbation (217) of the yaw rate (213) of the vehicle is carried out on the basis of a state mode of the vehicle.

3. Method according to Claim 1 or 2, **characterized in that** said second intermediate rear wheel steering angle setpoint value is determined so as asymptotically to reject the perturbation of the yaw rate.

4. Method according to any one of the preceding claims, **characterized in that** the perturbation (217) of the yaw rate of the vehicle is determined by means of a state model of the motor vehicle comprising the instantaneous longitudinal speed of the motor vehicle, the yaw rate of the motor vehicle, the front wheel steering angle, and the rear wheel steering angle, and in which a stepwise type perturbation acts on the yaw rate of the vehicle.

5. Method according to any one of the preceding claims, **characterized in that** said second intermediate rear wheel steering angle setpoint value is proportional to said perturbation in the yaw rate.

6. Method according to Claim 5, **characterized in that** the proportionality coefficient between the second intermediate rear wheel steering angle setpoint value and said perturbation is

$$G = \frac{\left( \left( D_1 L_1 - D_2 L_2 \right) * \left( M V^2 L_2 + D_1 L_1 \left( L_1 + L_2 \right) \right) - D_1 \left( L_1 + L_2 \right) \left( D_1 L_1^2 + D_2 L_2^2 \right) \right)}{V D_1 D_2 L_2 \left( L_1 + L_2 \right)}$$

where
M = total mass of the vehicle,
$L_1$ = distance from the center of gravity to the front axle,
$L_2$ = distance from the center of gravity to the rear axle,
$D_1$ = front drift rigidity,
$D_2$ = rear drift rigidity, and
V = instantaneous longitudinal speed of the vehicle.

7. Method according to any one of the preceding claims, **characterized in that** said current rear wheel steering angle setpoint value (220) is the sum of said first intermediate rear wheel steering angle setpoint value (218) and of said second intermediate rear wheel steering angle setpoint value (219).

8. Method according to any one of the preceding claims, **characterized in that** it furthermore comprises a step consisting in transmitting, in the absence of an asymmetric grip braking situation, said first rear wheel steering angle setpoint value (218) to said at least one steering actuator of said rear wheels.

9. Method according to any one of the preceding claims, **characterized in that** step b) furthermore consists in,

   - generating a rear wheel steering angle reference value (311),
   - determining, as a function of said value of the instantaneous longitudinal speed of the vehicle and of said value of the steering angle of the front wheels, a coefficient (312) to be applied to said rear wheel steering angle reference value to generate said first intermediate rear wheel steering angle setpoint value (218).

10. Method according to Claim 9, **characterized in that**

   - said rear wheel steering angle reference value is a maximum value of the rear wheel steering angle.

11. Method according to Claim 9, **characterized in that**

   - said rear wheel steering angle reference value is a maximum value of the rear wheel steering angle which is dependent on the front right braking pressure and on the front left braking pressure.

12. Method according to Claim 9, **characterized in that**

   - said rear wheel steering angle reference value is a value interpolated temporally between an initial minimum value and a final maximum value of the rear wheel steering angle.

13. Method according to Claim 9, **characterized in that**

   - said rear wheel steering angle reference value is a value interpolated temporally between an initial minimum value and a final maximum value of the steering angle, which value is dependent on the front right braking pressure and on the front left braking pressure.

14. Method according to any one of the preceding claims, **characterized in that** it furthermore comprises the steps consisting in,

- determining a braking pressure setpoint (230) in the form of a maximum braking pressure difference between the right and left rear wheels as a function of said first intermediate rear wheel steering angle setpoint value (218) and as a function of said speed value of the vehicle and of said value of the steering angle of the front wheels,
- transmitting said braking pressure setpoint value to an antilock braking control module (207).

15. Device for controlling the steering of the rear wheels of a motor vehicle with at least four steerable wheels, said device being suitable for the implementation of the method according to any one of the preceding claims and comprising,

a) means (207) for detecting the presence of an asymmetric grip braking situation,

b) means (205) for determining, independently of a previous rear wheel steering angle setpoint value (215), a first intermediate rear wheel steering angle setpoint value on the basis of the value of the instantaneous longitudinal speed of the vehicle and of the value of the steering angle of the front wheels,

c) means (203) for estimating the perturbation of the yaw rate of the vehicle, as a function of said previous rear wheel steering angle setpoint value,

d) means (204) for determining a second intermediate rear wheel steering angle setpoint value as a function of said perturbation,

e) means (208) for determining a current rear wheel steering angle setpoint value by correcting said first intermediate rear wheel steering angle setpoint value with said second intermediate rear wheel steering angle setpoint value,

f) means for transmitting said current wheel steering angle setpoint value (220) to a steering actuator of said rear wheels in the event of an asymmetric grip braking situation.

16. Motor vehicle comprising a braking control device according to Claim 15.


**Patentansprüche**

1. Verfahren zur Steuerung des Lenkeinschlags der Hinterräder eines Kraftfahrzeugs mit mindestens vier gelenkten Rädern, **dadurch gekennzeichnet, dass** es die folgenden Schritte enthält, die darin bestehen,

a) das Vorhandensein einer Bremssituation mit asymmetrischer Adhäsion zu erfassen,

b) unabhängig von einem vorhergehenden Hinterradeinschlagwinkel-Sollwert (215) einen ersten Hinterradeinschlagwinkel-Zwischensollwert (218) ausgehend von dem augenblicklichen Längsgeschwindigkeitswert (212) des Fahrzeugs und dem Einschlagwinkelwert (214) der Vorderräder zu bestimmen,

c) die Störung (217) an der Giergeschwindigkeit (213) des Fahrzeugs abhängig von dem vorhergehenden Hinterradeinschlagwinkel-Sollwert (215) zu schätzen,

d) einen zweiten Hinterradeinschlagwinkel-Zwischensollwert (219) abhängig von der Störung zu bestimmen,

e) den laufenden Hinterradeinschlagwinkel-Sollwert (220) zu bestimmen, indem der erste Hinterradeinschlagwinkel-Zwischensollwert (218) mit dem zweiten Hinterradeinschlagwinkel-Zwischensollwert (219) korrigiert wird,

f) im Fall einer Bremssituation mit asymmetrischer Adhäsion den laufenden Hinterradeinschlagwinkel-Sollwert (220) an mindestens einen Lenkeinschlag-Aktuator (120) der Hinterräder zu übertragen.

2. Verfahren nach Anspruch 1, **dadurch gekennzeichnet, dass** der Schritt des Schätzens der Störung (217) an der Giergeschwindigkeit (213) des Fahrzeugs ausgehend von einem Zustandsmodell des Fahrzeugs durchgeführt wird.

3. Verfahren nach Anspruch 1 oder 2, **dadurch gekennzeichnet, dass** der zweite Hinterradeinschlagwinkel-Zwischensollwert so bestimmt wird, dass die Störung an der Giergeschwindigkeit asymptotisch zurückgewiesen wird.

4. Verfahren nach einem der vorhergehenden Ansprüche, **dadurch gekennzeichnet, dass** die Störung (217) an der Giergeschwindigkeit des Fahrzeugs mittels eines Zustandsmodells des Kraftfahrzeugs bestimmt wird, das die augenblickliche Längsgeschwindigkeit des Kraftfahrzeugs, die Giergeschwindigkeit des Kraftfahrzeugs, den Vorderradeinschlagwinkel, den Hinterradeinschlagwinkel enthält, und bei dem eine stufenförmige Störung auf die Giergeschwindigkeit des Fahrzeugs einwirkt.

5. Verfahren nach einem der vorhergehenden Ansprüche, **dadurch gekennzeichnet, dass** der zweite Hinterradeinschlagwinkel-Zwischensollwert proportional zur Störung an der Giergeschwindigkeit ist.

6. Verfahren nach Anspruch 5, **dadurch gekennzeichnet, dass** der Proportionalitätskoeffizient zwischen dem Hinterradeinschlagwinkel-Zwischensollwert und der Störung ist:

$$G = \frac{\left((D_1 L_1 - D_2 L_2) * \left(MV^2 L_2 + D_1 L_1 (L_1 + L_2)\right) - D_1 (L_1 + L_2)\left(D_1 L_1^2 + D_2 L_2^2\right)\right)}{VD_1 D_2 L_2 (L_1 + L_2)}$$

mit
M Gesamtmasse des Fahrzeugs,
$L_1$ Abstand des Schwerpunkts zur Vorderachse,
$L_2$ Abstand des Schwerpunkts zur Hinterachse,
$D_1$ Driftsteifigkeit vorne,
$D_2$ Driftsteifigkeit hinten, und
V augenblickliche Längsgeschwindigkeit des Fahrzeugs.

7. Verfahren nach einem der vorhergehenden Ansprüche, **dadurch gekennzeichnet, dass** der laufende Hinterradeinschlagwinkel-Sollwert (220) die Summe des ersten Hinterradeinschlagwinkel-Zwischensollwerts (218) und des zweiten Hinterradeinschlagwinkel-Zwischensollwerts (219) ist.

8. Verfahren nach einem der vorhergehenden Ansprüche, **dadurch gekennzeichnet, dass** es außerdem einen Schritt enthält, der darin besteht, in Abwesenheit einer Bremssituation mit asymmetrischer Adhäsion den ersten Hinterradeinschlagwinkel-Sollwert (218) an den mindestens einen Lenkeinschlag-Aktuator der Hinterräder zu übertragen.

9. Verfahren nach einem der vorhergehenden Ansprüche, **dadurch gekennzeichnet, dass** der Schritt b) außerdem darin besteht,

- einen Hinterradeinschlagwinkel-Bezugswert (311) zu erzeugen,
- abhängig von dem augenblicklichen Längsgeschwindigkeitswert des Fahrzeugs und dem Einschlagwinkelwert der Vorderräder einen Koeffizienten (312) zu bestimmen, der an den Hinterradeinschlagwinkel-Bezugswert anzuwenden ist, um den ersten Hinterradeinschlagwinkel-Zwischensollwert (218) zu erzeugen.

10. Verfahren nach Anspruch 9, **dadurch gekennzeichnet, dass**

- der Hinterradeinschlagwinkel-Bezugswert ein maximaler Wert des Hinterradeinschlagwinkels ist.

11. Verfahren nach Anspruch 9, **dadurch gekennzeichnet, dass**

- der Hinterradeinschlagwinkel-Bezugswert ein maximaler Wert des Hinterradeinschlagwinkels ist, der vom vorderen rechten Bremsdruck und vom vorderen linken Bremsdruck abhängt.

12. Verfahren nach Anspruch 9, **dadurch gekennzeichnet, dass**

- der Hinterradeinschlagwinkel-Bezugswert ein zeitlich zwischen einem minimalen Anfangswert und einem maximalen Endwert des Hinterradeinschlagwinkels interpolierter Wert ist.

13. Verfahren nach Anspruch 9, **dadurch gekennzeichnet, dass**

- der Hinterradeinschlagwinkel-Bezugswert ein zeitlich zwischen einem minimalen Anfangswert und einem maximalen Endwert des Einschlagwinkels interpolierter Wert ist, der vom vorderen rechten Bremsdruck und vom vorderen linken Bremsdruck abhängt.

14. Verfahren nach einem der vorhergehenden Ansprüche, **dadurch gekennzeichnet, dass** es außerdem die folgenden Schritte enthält, die darin bestehen,

- einen Bremsdrucksollwert (230) in Form einer maximalen Druckdifferenz zwischen den rechten und linken Hinterrädern abhängig vom ersten Hinterradeinschlagwinkel-Zwischensollwert (218) und abhängig vom Geschwindigkeitswert des Fahrzeugs und vom Einschlagwinkelwert der Vorderräder zu bestimmen,
- den Bremsdrucksollwert an ein Antiblockier-Bremssteuerungsmodul (207) zu übertragen.

15. Vorrichtung zur Steuerung des Lenkeinschlags der Hinterräder eines Kraftfahrzeugs mit mindestens vier gelenkten Rädern, wobei die Vorrichtung das Verfahren nach einem der vorhergehenden Ansprüche durchführen kann und enthält

a) Einrichtungen (207) zum Erfassen des Vorhandenseins einer Bremssituation mit asymmetrischer Adhäsion,
b) Einrichtungen (205) zum Bestimmen, unabhängig von einem vorhergehenden Hinterradeinschlagwinkel-Sollwert (215), eines ersten Hinterradeinschlagwinkel-Zwischensollwerts ausgehend vom augenblicklichen Längsgeschwindigkeitswert des Fahrzeugs und vom Einschlagwinkelwert der Vorderräder,
c) Einrichtungen (203) zum Schätzen der Störung an der Giergeschwindigkeit des Fahrzeugs abhängig vom vorhergehenden Hinterradeinschlagwinkel-Sollwert,
d) Einrichtungen (204) zum Bestimmen eines zweiten Hinterradeinschlagwinkel-Zwischensollwerts abhängig von der Störung,
e) Einrichtungen (208) zum Bestimmen eines laufenden Hinterradeinschlagwinkel-Sollwerts, indem der erste Hinterradeinschlagwinkel-Zwischensollwert mit dem zweiten Hinterradeinschlagwinkel-Zwischensollwert korrigiert wird,
f) Einrichtungen, um im Fall einer Bremssituation mit asymmetrischer Adhäsion den laufenden Hinterradeinschlagwinkel-Sollwert (220) an einen Lenkeinschlag-Aktuator der Hinterräder zu übertragen.

16. Kraftfahrzeug, das eine Bremsvorrichtung nach Anspruch 15 enthält.

Fig. 1

Fig. 2

EP 1 799 529 B1

18

**Fig. 3a**

**Fig. 3b**

**Fig. 3c**

**Fig. 3d**

Fig. 4

**RÉFÉRENCES CITÉES DANS LA DESCRIPTION**

**Documents brevets cités dans la description**

*   US 20020198646 A
*   FR 0314931